(19) Europäisches Patentamt / European Patent Office / Office européen des brevets

(11) **EP 4 311 145 B1**

(12) **EUROPEAN PATENT SPECIFICATION**

(45) Date of publication and mention
of the grant of the patent:
**16.07.2025 Bulletin 2025/29**

(21) Application number: **22770602.5**

(22) Date of filing: **17.03.2022**

(51) International Patent Classification (IPC):
*H04L 1/1607* (2023.01)   *H04L 1/18* (2023.01)
*H04L 1/1829* (2023.01)   *H04L 1/1867* (2023.01)
*H04L 5/00* (2006.01)   *H04W 72/04* (2023.01)

(52) Cooperative Patent Classification (CPC):
**H04L 1/1861; H04L 1/1614; H04L 1/1854;
H04L 1/1896; H04L 5/00; H04L 5/0055**

(86) International application number:
**PCT/CN2022/081461**

(87) International publication number:
**WO 2022/194249 (22.09.2022 Gazette 2022/38)**

(54) **HARQ ACK FEEDBACK METHOD AND APPARATUS, AND TERMINAL AND STORAGE MEDIUM**

VERFAHREN UND VORRICHTUNG FÜR HARQ-ACK-FEEDBACK SOWIE ENDGERÄT UND
SPEICHERMEDIUM

APPAREIL ET PROCÉDÉ DE RÉTROACTION D'ACK HARQ, TERMINAL ET SUPPORT DE
STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2021 CN 202110297345**

(43) Date of publication of application:
**24.01.2024 Bulletin 2024/04**

(73) Proprietor: **Vivo Mobile Communication Co., Ltd.
Dongguan, Guangdong 523863 (CN)**

(72) Inventors:
• **LI, Can**
  **Dongguan, Guangdong 523863 (CN)**
• **ZENG, Chaojun**
  **Dongguan, Guangdong 523863 (CN)**
• **HONG, Qi**
  **Dongguan, Guangdong 523863 (CN)**

(74) Representative: **Conti, Marco
Bugnion S.p.A.
Via di Corticella, 87
40128 Bologna (IT)**

(56) References cited:
**EP-A1- 4 068 666     WO-A1-2018/145074
WO-A1-2020/063301     WO-A1-2021/016997
WO-A1-2021/030947     CN-A- 111 770 572**

• **SAMSUNG: "PDSCH/PUSCH enhancements for
NR from 52.6 GHz to 71 GHz", vol. RAN WG1, no.
e-Meeting; 20210125 - 20210205, 19 January 2021
(2021-01-19), XP051971412, Retrieved from the
Internet <URL:https://ftp.3gpp.org/tsg_ran/
WG1_RL1/TSGR1_104-e/Docs/R1-2101198.zip
R1-2101198.docx> [retrieved on 20210119]**

## Description

## TECHNICAL FIELD

This application pertains to the field of communications technologies, and specifically, relates to a HARQ ACK feedback method and apparatus, a terminal, and a storage medium.

## BACKGROUND

HARQ-ACK feedback information transmitted by a terminal on a hybrid automatic repeat request (Hybrid Automatic Repeat reQuest, HARQ) feedback resource (physical uplink control channel (Physical Uplink Control Channel, PUCCH) or a physical uplink shared channel (Physical Uplink Shared Channel, PUCCH) is entirely called HARQ-ACK codebook.

In existing NR communications systems, one piece of downlink control information (Downlink Control Information, DCI) has been allowed to schedule multiple physical downlink shared channels (Physical Downlink Share Channel, PDSCH) in the 52.6 GHz-71 GHz band. However, existing HARQ-ACK semi-static codebook feedback methods may lead to problems of loss of HARQ ACK feedbacks for some PDSCHs and excessive overheads due to a large number of HARQ ACK codebook bits.

## SUMMARY

Embodiments of this application provide a HARQ ACK feedback method and apparatus, a terminal, and a storage medium, which can solve the problems of loss of feedbacks for some PDSCHs and excessive overheads due to a large number of codebook bits. The scope of the present invention is determined only by the scope of the appended claims. More precisely, according to a first aspect, an embodiment of the present disclosure provides a HARQ ACK feedback method, according to claim 1 and further detailed in the dependent claims referring back to this claim. According to a second aspect, an embodiment of the present disclosure further provides a HARQ ACK feedback apparatus, according to claim 10 and further detailed in the dependent claims referring back to this claim. According to a third aspect, an embodiment of the present disclosure further provides a readable storage medium, according to claim 15.

In embodiments of this application, a candidate physical downlink shared channel PDSCH reception occasion set is determined based on at least two consecutive slot units corresponding to each element in a slot timing set. That is, one slot timing set can correspond to as many feedback slot units as possible to carry feedbacks on one PUCCH, ensuring that feedbacks are provided for all scheduled PDSCHs and HARQ-ACKs for the scheduled PDSCHs are fed back on as few PUCCHs as possible. This reduces the number of semi-static codebook feedback bits, reduces overheads, and avoids that a feedback cannot be provided for a PDSCH in a case that one DCI schedules multiple PDSCHs at a time, thereby improving flexibility of base station scheduling. Document EP4068666A1 discusses a terminal determining and reporting a specific codebook-based HARQ-ACK on the basis of the result of receiving a plurality of PDSCHs, and, on the basis of a first-type codebook-based HARQ-ACK having been set for scheduling of the plurality of PDSCHs, the terminal can perform first start symbol and length indicator value (SLIV) pruning on the basis of a set of the SLIVs of PDSCHs, which can be potentially scheduled on each slot of a bundling window determined on the basis of a plurality of candidate PDSCH-to-HARQ feedback timing values, and perform second SLIV pruning on the basis of a set of the SLIVs of PDSCHs, which can be potentially scheduled even on at least one slot that does not belong to the bundling window. Document "PDSCH/PUSCH enhancements for NR from 52.6 GHz to 71 GHz", 3GPP DRAFT R1-2101198 of January 19, 2021 discusses aspects related to PDSCH/PUSCH enhancements and the extension of current NR operations to 71 GHz.

## BRIEF DESCRIPTION OF DRAWINGS

FIG. 1 is a block diagram of a wireless communications system to which embodiments of this application are applicable;
FIG. 2 is a schematic diagram of a TDRA table according to an embodiment of this application;
FIG. 3 is a schematic diagram of a HARQ-ACK feedback window determined based on a set K1 according to an embodiment of this application;
FIG. 4 illustrates a first method for determining an overlapping candidate PDSCH reception occasion according to an embodiment of this application;
FIG. 5 illustrates a second method for determining an overlapping candidate PDSCH reception occasion according to an embodiment of this application;
FIG. 6 is a schematic flowchart of a HARQ ACK feedback method according to an embodiment of this application;
FIG. 7 is a first schematic diagram of HARQ-ACK feedback for a PDSCH according to an embodiment of this application;
FIG. 8 is a second schematic diagram of a HARQ-ACK feedback for a PDSCH according to an embodiment of this application;
FIG. 9 is a schematic diagram of a structure of a HARQ ACK feedback apparatus according to this application;
FIG. 10 is a schematic diagram of a structure of a communications device according to an embodiment of this application; and

FIG. 11 is a schematic diagram of a hardware structure of a terminal implementing an embodiment of this application.

## DESCRIPTION OF EMBODIMENTS

The following clearly describes the technical solutions in the embodiments of this application with reference to the accompanying drawings in the embodiments of this application.

The terms "first", "second", and the like in this specification and claims of this application are used to distinguish between similar objects rather than to describe a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

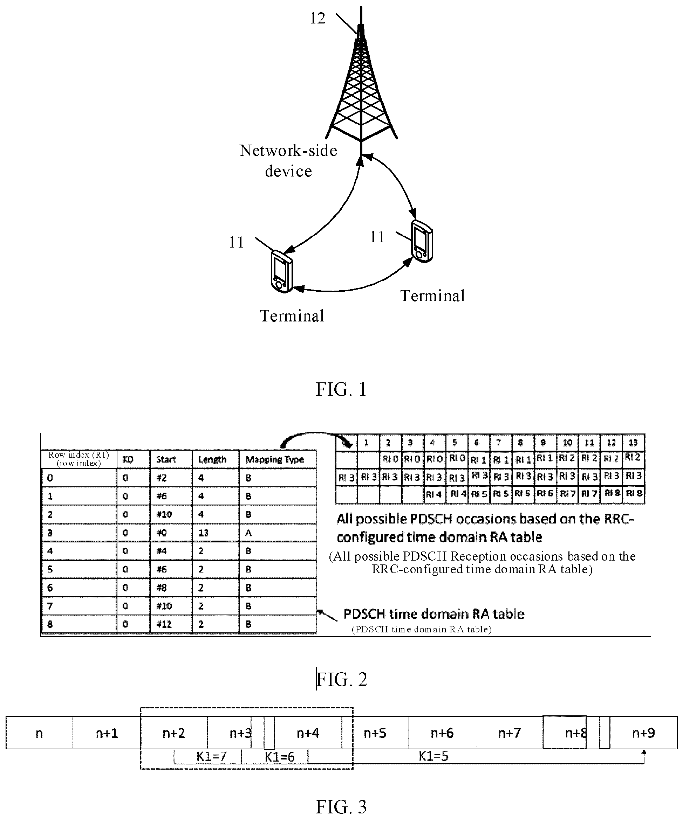

FIG. 1 is a block diagram of a wireless communications system to which embodiments of this application are applicable. The wireless communications system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that in embodiments of this application, the core network device in an NR system is used only as an example, and the specific type of the core network device is not limited herein.

The following describes in detail the HARQ ACK feedback method and apparatus provided in the embodiments of this application by using some embodiments and application scenarios thereof with reference to the accompanying drawings.

The following content is described first.

(1) Generation of a semi-static codebook in an NR system:

HARQ-ACK information fed back by a UE on a HARQ feedback resource (a PUCCH or a PUSCH) is entirely called as a HARQ-ACK codebook.

A timing parameter K1 identifies a slot or subslot offset between a PDSCH and a corresponding feedback resource (PUCCH/PUSCH). A possible set is specified or predefined by radio resource control (Radio Resource Control, RRC), and then a value is indicated by a field in scheduling DCI information of the PDSCH. If the DCI does not have such field, the value is indicated by RRC.

The size of the HARQ-ACK semi-static codebook is irrelevant to an actual scheduling situation, and is determined by a parameter configured or predefined by RRC. In a case that RRC parameter pdsch-HARQ-ACK-Codebook=semi-static, the semi-static codebook is configured.

(2) Constitution of a semi-static codebook includes the following steps.

1. Determine a candidate PDSCH reception occasion set: a set of active downlink bandwidth parts (bandwidth part, BWP) and uplink BWPs for all serving cells, and all downlink data requiring HARQ ACK feedback, with respect to a specific actual HARQ ACK feedback unit (slot/subslot n). The set is determined by the following parameters:

(a) Slot timing set K1 associated with an active uplink BWP of each serving cell corresponding to slot n.

In a case that a UE is configured to perform detection for DCI format 1-0 but is not configured to perform detection for DCI format 1-1 in a serving cell c, the set K1 is {1, 2, 3, 4, 5, 6, 7, 8}.

In a case that the UE is configured to perform detection for DCI format 1-1 in the serving cell c, the set K1 is provided by a higher-layer parameter dl-DataToUL-ACK.

(b) Row index set of a table. The table for set 1 is a default TDRA table or a TDRA table defined by pdsch-ConfigCommon in a higher-layer time domain allocation parameter pdsch-TimeDomainAllocationList associated with the downlink BWP, or a joint indication of set 1 and set 2. The set 2 is indicated by pdsch-Config in the higher-layer time domain allocation parameter pdsch-TimeDomainAllocationList. The TDRA table contains K0, a start symbol and length of consecutive symbols (startSymbolAndLength, SLIV), and a PDSCH mapping type.

In addition, this step further depends on whether the UE can receive multiple PDSCHs in one slot. In a case that the UE cannot receive multiple PDSCHs, each slot has only one candidate PDSCH reception occasion. Otherwise, it is determined by specific rules according to the TDRA table.

(c) Subcarrier spacing (subcarrier spacing, SCS) ratio of uplink and downlink BWPs.
(d) Higher-layer uplink and downlink configuration parameters: tdd-UL-DL-ConfigurationCommon and tdd-UL-DL-ConfigurationDedicated indicate uplink symbols and downlink symbols.

The candidate slot position for a PDSCH can be obtained based on the slot timing set K1 associated with the uplink BWP and the actual HARQ ACK feedback unit. Through comparison with time division duplexing (Time Division Duplexing, TDD) frame structure configuration, a PDSCH SLIV overlapping with an uplink symbol in the TDD configuration is removed. The candidate PDSCH reception occasion set may be obtained through combination/grouping based on TDRA associated with the downlink BWP.

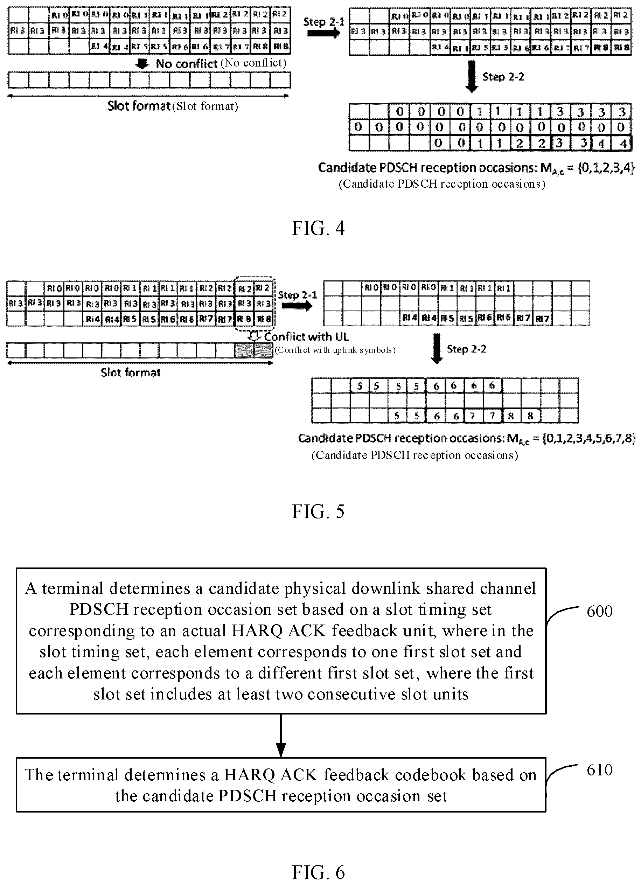

For example, FIG. 2 is a schematic diagram of a TDRA table according to an embodiment of this application. It is assumed that the set K1 configured by RRC is {5, 6, 7}, and the TDRA table for PDSCH is shown in FIG. 2. FIG. 3 is a schematic diagram of a HARQ-ACK feedback window determined based on a set K1 according to an embodiment of this application. FIG. 4 illustrates a first method for determining an overlapping candidate PDSCH reception occasion according to an embodiment of this application. FIG. 5 illustrates a second method for determining an overlapping candidate PDSCH reception occasion according to an embodiment of this application. The process of determining a semi-static codebook is as follows.

Step 1. Determine a HARQ-ACK feedback window based on a set K1, as shown in FIG. 3.

Step 2. Determine a candidate PDSCH reception occasion set in each slot for each value of K1.

Step 2-1. Remove a candidate PDSCH reception occasion overlapping with an uplink symbol that is in the TDRA table and that is indicated by RRC configuration parameters TDD-UL-DL-Configuration Common and TDD-UL-DL-Config Dedicated.

Step 2-2. Generate only one HARQ-ACK bit for an overlapping candidate PDSCH reception occasion.

In a case that K1=7, none of candidate PDSCH reception occasions has a conflict with an uplink symbol, and therefore, they all can be reserved.

In a case that K1=6, PDSCH candidate positions in rows 2, 3, and 8 overlap with uplink symbols, and therefore are removed.

In a case that K1=5, all candidate PDSCH reception occasions overlap with uplink symbols and therefore are removed.

Then, the candidate PDSCH reception occasion set is: $M_{A,c}=\{0, 1, 2, 3, 4, 5, 6, 7, 8\}$.

2. Determine HARQ-ACK information.

The UE feeds back a NACK in a case that no PDSCH reception is scheduled in a determined candidate PDSCH reception occasion.

The UE feeds back a NACK in a case that a PDSCH reception requiring feedback in a current slot is not indicated for a determined candidate PDSCH reception occasion.

In case of a PDSCH feedback window overlap, feedback is provided in a position indicated by DCI format 1-0 or DCI format 1-1, and a NACK feedback is provided in another feedback window.

For a candidate PDSCH reception occasion set with an ACK/NACK feedback, a HARQ-ACK codebook is determined jointly based on candidate PDSCH sets of cells obtained in step 1 and the number of cells configured by RRC, a HARQ space binding parameter, a code block group (Code block group, CBG) configuration parameter, and a parameter indicating longest codewords (codeword) supported by cells.

> CodeWords=1, CBG not transmitted;
> 1bit feedback: TB1 HARQ;
> CodeWords=1, CBG transmitted;
> max CBG number bit feedback: TB1 HARQ;
> CodeWords=2, not bound, CBG not transmitted;
> 2bit feedback: TB1 HARQ, TB2 HARQ;
> CodeWords=2, bound;
> 1bit feedback: TB1 HARQ & TB2 HARQ;
> CodeWords=2, not bound, CBG transmitted;
> 2*max CBG number bit feedback: TB1 CBG HARQ and TB2 CBG HARQ;
> in a case that CodeWords=2 and that the UE receives only one PDSCH, feedback is provided in the position of TB1; in a case that HARQ space binding is configured, ACK feedback is provided in the position of TB2; otherwise, NACK feedback is provided.

(3) Multiple PDSCHs scheduled by one DCI;

The NR system at the 52.6 GHz-71 GHz band allows multiple PDSCHs to be scheduled by one DCI but does not provide further specification on indication of PDSCH time domain and frequency domain, K1 indication, codebook generation and feedback, or the like.

PDSCH time domain configuration may be that multiple SLIVs are configured by RRC in one row of TDRA.

FIG. 6 is a schematic flowchart of a HARQ ACK feedback method according to an embodiment of this application. As shown in FIG. 6, the method includes the following steps.

Step 600. A terminal determines a candidate physical downlink shared channel PDSCH reception occasion set based on a slot timing set corresponding to an actual HARQ ACK feedback unit, where in the slot timing set, each element corresponds to one first slot set and each element corresponds to a different first slot set, where the first slot set includes at least two consecutive slot units.

Step 610. The terminal determines a HARQ ACK feedback codebook based on the candidate PDSCH reception occasion set.

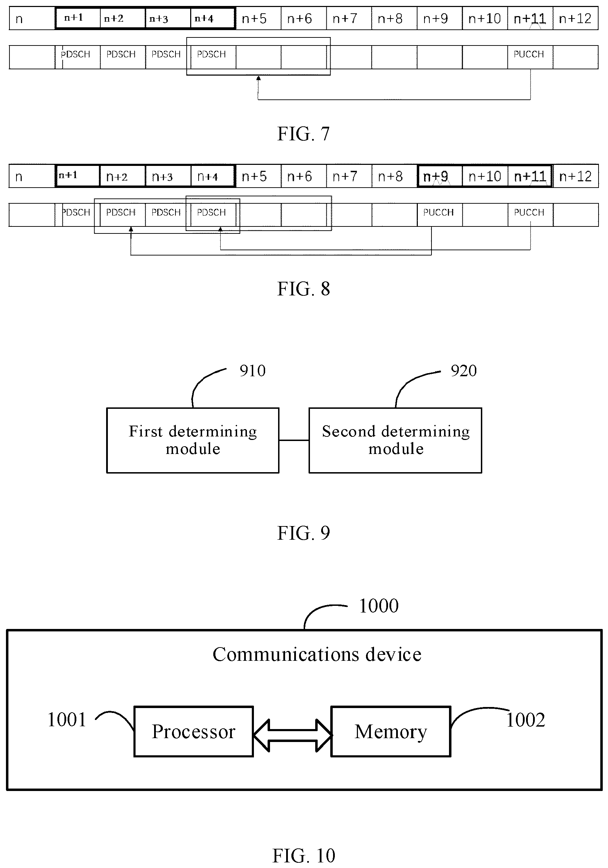

FIG. 7 is a first schematic diagram of HARQ-ACK feedback for a PDSCH according to an embodiment of this application, where one DCI schedules multiple PDSCHs, and HARQ-ACKs for all PDSCHs are fed back on one PUCCH. FIG. 8 is a second schematic diagram of HARQ-ACK feedback for a PDSCH according to an embodiment of this application, where one DCI schedules multiple PDSCHs, and HARQ-ACK groups for all PDSCHs are fed back on one PUCCH. As shown in FIG. 7 and FIG. 8, the set K1 is configured to be {5, 6, 7} by RRC through dl-DataToUL-ACK, the PDSCH-to-HARQ feedback timing indicator field of DCI 1-1 indicates that the value of K1 is 7, and the UE is configured to perform detection for DCI format 1-1 in the serving cell c. According to the generation manner of a semi-static codebook, in a case that K1 in the DCI is indicated to be a large value in the set, it is possible that feedbacks for PDSCHs in one group cannot be carried on one PUCCH. Alternatively, HARQ-ACK bits corresponding to some PDSCHs scheduled by the DCI may not be present in the HARQ-ACK codebook carried on the PUCCH, and implementation of the base station is also limited to some extent.

Therefore, existing HARQ-ACK semi-static codebooks may lead to problems of loss of feedbacks for some PDSCHs and excessive overheads due to a large number of codebook bits. In this embodiment of this application, each element in the slot timing set corresponds to the at least two consecutive slot units, thereby ensuring that feeding back can be implemented for all PDSCHs in a case that multiple PDSCHs are scheduled by one DCI, and reducing codebook overheads and terminal power consumption.

The terminal determines a candidate physical downlink shared channel PDSCH reception occasion set based on a slot timing set corresponding to an actual HARQ ACK feedback unit; and determines a HARQ ACK feedback codebook based on the candidate PDSCH reception occasion set.

Optionally, in order that feedbacks can be provided for all scheduled PDSCHs and HARQ-ACKs for the scheduled PDSCHs can be fed back on as few PUCCHs as possible, when configuring a slot timing set for the terminal, a base station may configure a slot timing set indicating slot units for all PDSCHs scheduled by one DCI. This ensures that HARQ ACK feedbacks for the PDSCHs are all in corresponding slot units, avoiding that the slot timing set cannot allow feedbacks for PDSCHs in one group to be fed back on one PUCCH. Furthermore, this can also avoid that HARQ-ACK bits corresponding to some PDSCHs scheduled by the DCI may not be present in the HARQ-ACK codebook carried on the PUCCH.

Optionally, a slot unit may be a slot or a subslot.

Optionally, the slot timing set corresponding to the actual HARQ ACK feedback unit may be a slot timing set associated with the uplink BWP of the actual HARQ ACK feedback unit (slot/subslot n).

For example, the slot timing set corresponding to the actual HARQ ACK feedback unit may be a slot timing set K1 associated with the uplink BWP of the actual HARQ ACK feedback unit (slot/subslot n).

Optionally, when the terminal determines the candidate physical downlink shared channel PDSCH reception occasion set based on the slot timing set corresponding to the actual HARQ ACK feedback unit, it may be assumed that the actual HARQ ACK feedback unit is a slot n and that elements of the slot timing set include the value of K1. Then, a feedback window, namely, a slot unit for a PDSCH feedback may be determined based on the value of element K1 and the slot unit n. To be specific, n-K1 can be used to determine a target slot unit in the first slot set. Then, it can be considered that the first slot set includes the target slot unit and at least one slot unit adjacent or contiguous to the target slot unit. For example, the first slot set may be {n-K1, n-K1-1, n-K1-2}.

Optionally, in an example in which elements of the slot timing set include K1, each K1 value in the slot timing set K1 associated with the uplink BWP of the actual HARQ ACK feedback unit (slot/subslot n) corresponds to consecutive M slots or subslots. That is, K1 values correspond to the first slot set of {n-K1, n-K1-1, n-K1-2, n-K1-M+1}.

Optionally, after the position of the feedback window is determined, the candidate PDSCH reception occasion set can be further determined. Then, the HARQ ACK feedback codebook can be determined based on the candidate PDSCH reception occasion set.

Optionally, in this embodiment of this application, a slot refers to a slot and/or subslot. In this embodiment of this application, the candidate physical downlink shared channel PDSCH reception occasion set is determined based on the at least two consecutive slot units corresponding to each element in the slot timing set. That is, one slot timing set can correspond to as many feedback slot units as possible to carry feedbacks on one PUCCH, ensuring that feedbacks are provided for all scheduled PDSCHs and HARQ-ACKs for the scheduled PDSCHs are fed back on as few PUCCHs as possible. This reduces the number of semi-static codebook feedback bits, reduces overheads, and avoids that a feedback cannot be provided for a PDSCH in a case that one DCI schedules multiple PDSCHs at a time, thereby improving flexibility of base station scheduling.

Optionally, the determining a candidate physical downlink shared channel PDSCH reception occasion set based on a slot timing set corresponding to an actual HARQ ACK feedback unit includes:

determining a second slot set corresponding to the candidate PDSCH reception occasion set based on the first slot set corresponding to each element in the slot timing set; where
the second slot set includes all slot units in all first slot sets, and all the slot units are non-repetitive.

Optionally, each element in the slot timing set may correspond to at least two consecutive slot units and it is highly likely that values of the elements in the slot timing set are consecutive. Therefore, target slot units corresponding to all elements may be adjacent or proximate. In the case of obtaining a slot unit adjacent or contiguous to a target slot unit, a target slot unit corresponding to another element or a slot unit adjacent to such target slot unit may be obtained. Therefore, the first slot sets corresponding to the elements in the slot timing set may include repetitive slot units. Thus, a union of the first slot sets corresponding to the elements in the slot timing set can be obtained.

Optionally, in an example in which elements of the slot timing set include K1, a union of the first slot sets corresponding to the slot timing set associated with the uplink BWP is obtained to obtain a second slot set.

Optionally, the second slot set is a candidate PDSCH reception occasion set.

Optionally, elements in the second slot set may include all elements in all first slot sets, and all elements in the second slot set are non-repetitive. In other words, the second slot set includes all slot units in all first slot sets, and all slot units in the second slot set are non-repetitive.

Optionally, the determining a candidate physical downlink shared channel PDSCH reception occasion set based on a slot timing set corresponding to an actual HARQ ACK feedback unit includes:

performing grouping on a target SLIV set in a time domain resource allocation TDRA table to obtain at least one first target group; and
the determining a HARQ ACK feedback codebook based on the candidate PDSCH reception occasion set includes:

determining the HARQ ACK feedback codebook based on the at least one first target group; where

each candidate PDSCH reception occasion corresponds to one first target group.

Optionally, in determining the candidate PDSCH reception occasion set, grouping may be performed on the target SLIV set in the time domain resource allocation TDRA table to obtain the at least one first target group. Each first target group may correspond to one candidate PDSCH reception occasion, that is, only one ACK or NACK is fed back.

Optionally, a method similar to an overlapped grouping method may be used to perform grouping on the target SLIV set, which is not limited in the embodiments of this application.

Optionally, in feeding back HARQ ACKs for the candidate PDSCH occasion set, P bits may be fed back for each candidate PDSCH reception occasion in the candidate PDSCH occasion set. P is jointly determined by a HARQ space binding parameter, a CBG configuration parameter, and a parameter indicating the longest codeword (codeword) supported by cells. The UE feeds back a NACK in a case that no PDSCH reception is scheduled for the determined candidate PDSCH reception occasion set. The UE feeds back a NACK in a case that PDSCH reception requiring feedback in a current slot is not indicated for the determined candidate PDSCH reception occasion set. In a case that a SLIV for the scheduled PDSCH is present in the candidate PDSCH reception occasion set, a corresponding HARQ ACK value is fed back, and other SLIVs that overlap with the SLIV in time domain are removed. Alternatively, other rows that overlap with a SLIV in a row and have overlap in time domain within a SLIV subset are removed.

Optionally, the target SLIV set includes a set formed by all SLIVs in the TDRA table.

Optionally, the target SLIV set may include a set formed by all SLIVs in the TDRA table.

Optionally, in determining the candidate PDSCH reception occasion set, SLIV sets formed by all SLIVs in all rows of the TDRA are grouped. That is, all SLIVs in the TDRA table are grouped.

Optionally, the overlapped grouping method may be used to group into X SLIV subsets, namely X first target groups.

Optionally, each of the slot units in the second slot set corresponds to at least one candidate PDSCH reception occasion.

Optionally, an example is used, in which X first target groups are X SLIV subsets and no CBG transmission is configured and a single codeword is used, or two codewords+spatial multiplexing is used. Each slot in the second slot set includes X SLIV subsets, and each candidate PDSCH reception occasion corresponds to one SLIV subset. In a case that one NACK or ACK feedback is provided for each SLIV subset, each slot includes X candidate PDSCH reception occasions, that is, X NACKs or ACKs are provided.

Optionally, in a case that the second slot set includes M slot units, a total of X×M candidate PDSCH reception occasions are provided. That is, X×M bits are required for feedback.

For example, RRC-configured TDRA contains two rows, which are (0-13) and (2-7)+(8-13)+(0-10), the set K1 configured by RRC is {5, 6}, and no CBG transmission is configured and a single codeword is used, or two codewords+spatial multiplexing is used. According to the maximum number of slots contained in the two SLIV rows, M is 2, and a current slot n is used for HARQ ACK feedback. In this case, K1 corresponds to first slot sets {n-5, n-6} and {n-6, n-7}, and the second slot set is {n-5, n-6, n-7} after obtaining a union thereof. The SLIV sets formed by all rows are {(2~7), (8-13), (0-10), (0-13)}, and after grouping by using the overlapped grouping method, the SLIV sets may be {(2-7), (0-10), (0-13)}, and {(8-13)}.

Optionally, the determining a HARQ ACK feedback codebook based on the candidate PDSCH reception occasion set includes:

for each first target group, feeding back an ACK or NACK for only at most one SLIV in the first target group.

Optionally, for each first target group, due to time domain overlap of SLIVs therein, an ACK or NACK feedback for at most one SLIV is provided.

Optionally, before the performing grouping on a target SLIV set in a TDRA table, the method further includes:

removing, from the second slot set, an SLIV configured for uplink in a TDD frame structure.

Optionally, in the case of grouping all SLIVs in the TDRA table, grouping can be performed after removing, from the second slot set corresponding to the set K1, an SLIV having a symbol configured for uplink in a TDD frame structure. For example, in the case of determining the candidate PDSCH reception occasion set, an SLIV having a symbol configured for uplink in a TDD frame structure may be removed from the second slot set corresponding to the set K1. Then the remaining SLIVs may be grouped.

Optionally, the target SLIV set includes an SLIV set formed by SLIVs in predetermined positions in all rows of the TDRA table.

Optionally, the target SLIV set may include an SLIV set formed by SLIVs in predetermined positions in all rows of the TDRA table.

Optionally, the predetermined position may be the last SLIV, which is not limited in the embodiments of this application.

Optionally, in a case that consecutive PDSCH resources scheduled by a DCI are determined to be corresponding to rows in the RRC-configured TDRA, in the case of determining a candidate PDSCH reception occasion set, a SLIV set formed by SLIVs of all rows (for example, the last ones) in the TDRA may be determined and subjected to grouping.

Optionally, the overlapped grouping method may be used to group into Y SLIV subsets, namely, Y first target groups.

For example, RRC-configured TDRA contains three rows, which are (0-8) and (2-7)+(8-13)+(0-10), and (11-13), the set K1 configured by RRC is {5, 6}, and no CBG transmission is configured and a single codeword is used, or two codewords+spatial multiplexing are used. According to the maximum number of slots contained in the three SLIV rows, M may be 2, and a current slot n is used for HARQ ACK feedback. In this case, K1 corresponds to first slot sets {n-5, n-6} and {n-6, n-7}, and the second slot set is {n-5, n-6, n-7} after obtaining a union. The SLIV set formed by the last SLIV of each row may be {(0-10), (0-8), (11-13)}.

Optionally, each first slot set corresponds to at least one candidate PDSCH reception occasion.

Optionally, an example is used, in which Y first target groups are Y SLIV subsets and no CBG transmission is configured and a single codeword is used, or two codewords+spatial multiplexing are used. Each first slot set has Y SLIV subsets, and each SLIV subset includes Z PDSCH reception occasion sets. Z is the number of SLIVs in a row containing the maximum number of SLIVs in that SLIV subset, or the number of SLIVs in a row containing the maximum number of SLIVs among all rows in the TDRA. In a case that one NACK or ACK is fed back for each SLIV subset, $Y \times Z$ or $\sum_{1}^{Y} Z_m$ candidate PDSCH reception occasions are avaible for feedback, namely $Y \times Z$ or $\sum_{m=1}^{Y} Z_m$ NACKs or ACKs.

Optionally, the determining a HARQ ACK feedback codebook based on the candidate PDSCH reception occasion set includes:

for each first target group, feeding back an ACK or NACK for only at most one SLIV-containing row in the first target group, where
the number of ACKs or NACKs for the at most one SLIV-containing row is determined based on the number of SLIVs in a row containing the maximum number of SLIVs among all SLIV-containing rows or determined based on the number of SLIVs in a row containing the maximum number of SLIVs among all rows in the TDRA table.

Optionally, for each first target group, due to time domain overlap of SLIVs therein, an ACK or NACK feedback for the at most one SLIV-containing row in the first target group is provided.

Optionally, the number P of ACKs or NACKs for the at most one SLIV-containing row may be determined based on the number of SLIVs in a row containing the maximum number of SLIVs (P SLIVs) among all SLIV-containing rows.

Optionally, the number P of ACKs or NACKs for the at most one SLIV-containing row may be determined based on the number of SLIVs in a row containing the maximum number of SLIVs (P SLIVs) in the TDRA table.

Optionally, before the performing grouping on a target SLIV set in a TDRA table, the method further includes:
removing, from the first slot set, all SLIVs in a row containing an SLIV configured for uplink in a TDD frame structure.

Optionally, in the case of grouping the SLIV set formed by SLIVs in predetermined positions in all rows of the TDRA table, all SLIVs in a row containing an SLIV configured for uplink in a TDD frame structure may be removed from the first slot set.

Optionally, in a case that consecutive PDSCH resources scheduled by a DCI are determined to be corresponding to rows in the RRC-configured TDRA, in the case of determining a candidate PDSCH reception occasion set, all SLIVs in a row containing an SLIV configured for uplink in a TDD frame structure may be first removed from the first slot set. Then, SLIV sets formed by SLIVs of all rows (for example, the last ones) in the TDRA are determined and grouped.

Optionally, the determining a HARQ ACK feedback codebook based on the candidate PDSCH reception occasion set includes:

grouping candidate PDSCH reception occasions to obtain at least one second target group; and
determining the HARQ ACK feedback codebook based on the at least one second target group.

Optionally, to save resources and reduce feedback bits, the candidate PDSCH reception occasions can be grouped to obtain at least one second target group, and AND calculation is performed on ACKs or NACKs for candidate PDSCH reception occasions in each second target group. In a case that feedbacks for the candidate PDSCH reception occasions in second target group a are all ACKs, bits in a codebook corresponding to second target group a are ACK. In a case that at least one feedback of the candidate PDSCH reception occasions in second target group b is NACK, bits in a codebook corresponding to second target group b are NACK.

Optionally, the determining a HARQ ACK feedback codebook based on the candidate PDSCH reception occasion set includes:

grouping slot units in the second slot set to obtain at least one second target group; and
determining the HARQ ACK feedback codebook based on the candidate PDSCH reception occasion sets of slot units in each second target group.

Optionally, to save resources and reduce feedback bits, the slot units in the second slot set can be grouped to obtain at least one second target group, and AND calculation is performed on ACKs or NACKs of candidate PDSCH reception occasions of the slot units in each second target group. In a case that feedbacks for the candidate PDSCH reception occasions of the slot units in second target group a are all ACKs, bits in a codebook corresponding to second target group a are ACK. In a case that at least one feedback of the candidate PDSCH reception occasions of the slot units in second target group b is NACK, bits in a codebook corresponding to second target group b are NACK.

Optionally, the HARQ ACK feedback codebook includes a first codebook, where

each second target group corresponds to one bit in the first codebook.

Optionally, the candidate PDSCH reception occasions or slot units in the second slot set may be grouped. For example, one group of ACK/NACK values, namely, the first codebook, may be fed back every K candidate slots/subslots slot or candidate PDSCH reception occasions. That is, every K candidate slots slot or candidate PDSCH reception occasions are one second target group.

Optionally, in a case that two codewords are used and spatial multiplexing is not considered, this group of HARQ ACKs occupies two bits; otherwise, a single bit is occupied.

Optionally, the value of K, which is the number of slot units in the second target group or the number of candidate PDSCH reception occasions may be configured by a higher layer, or predefined, or fixed.

Optionally, higher-layer configuration or predefining may be that: the value of K is associated with an SCS of a downlink BWP/uplink BWP in which the actual HARQ ACK feedback unit (slot/subslot n) is.

Optionally, in a case that one ACK/NACK value is fed back every K candidate PDSCH reception occasions and the second slot set corresponds to a total of M1 slots, $\lceil M1/K \rceil$ first codebooks of ACK/NACKs are fed back in total. The second codebook is HARQ-ACK bitmap information of candidate PDSCH reception occasions contained in K slots. The bitmap length is determined based on the number of candidate PDSCH reception occasions in each group after grouping.

Optionally, in a case that one ACK/NACK is fed back every K1 candidate PDSCH reception occasions and M2 candidate PDSCH reception occasions are determined for the second slot set, [M2/K1] first codebooks of ACK/NACKs are fed back in total. The second codebook is bitmap information with the length being K1.

Optionally, in a case that bits in the first codebook contain a NACK, the HARQ ACK feedback codebook includes a second codebook, where

bits in the second codebook contain an ACK or NACK of each candidate PDSCH reception occasion in the second target group corresponding to the NACK in the first codebook.

Optionally, for an ACK feedback in the first codebook, an ACK/NACK of each candidate PDSCH reception occasion may not be additionally indicated.

Optionally, for a NACK feedback in the first codebook, an ACK/NACK for each candidate PDSCH reception occasion in a group corresponding to the NACK or candidate PDSCH reception occasions of each slot unit may be fed back in the second codebook.

Optionally, the first codebook may be followed by the second codebook, and the corresponding second codebook is arranged in a corresponding candidate PDSCH reception occasion order of the first codebook.

Optionally, the first codebook and the second codebook are carried on different PUCCH resources.

Optionally, the first codebook and the second codebook may be carried on different PUCCH resources.

Optionally, the different PUCCH resources may be reused through time division/frequency division multiplexing or by other means.

Optionally, the slot timing set includes at least one slot timing value K1, and positions of the at least two consecutive slot units are determined based on the at least one slot timing value K1 and the number of the at least two consecutive slot units; or

the slot timing set includes at least one slot timing value K1 and at least one slot timing offset, and positions of the at least two consecutive slot units are determined based on the at least one slot timing value K1 and the at least one slot timing offset; where the number of the at least two consecutive slot units is preconfigured, or predefined by a protocol, or a fixed value.

Optionally, the slot timing set may include at least one slot timing value K1, and positions of the at least two consecutive slot units are determined based on the at least one slot timing value K1 and the number of the at least two consecutive slot units. To be specific, it is assumed that the actual HARQ ACK feedback unit is a slot/subslot n and that elements in the slot timing set include K1. Then, a feedback window, namely, a slot unit for the PDSCH requiring a feedback may be determined by the element K1 and the slot unit n. To be specific, n-K1 can be used to determine a target slot unit in the first slot set. Then, it can be considered that the first slot set includes the target slot unit and at least one slot unit adjacent or contiguous to the target slot unit. For example, the first slot set may be {n-K1, n-K1-1, n-K1-2}, or {n-K1, n-K1-1, n-K1-2}, or {n-K1, n-K1-1, n-K1-2, n-K1-3}. That is, it can be considered that one value of K1 corresponds to the first slot set of {n-K1, n-K1-1, n-K1-2, n-K1-M+1}.

Optionally, the slot timing set may include at least one slot timing value K1 and at least one slot timing offset, and positions of the at least two consecutive slot units are determined based on the at least one slot timing value K1 and the at least one slot timing offset such as {offset1, offset2...offset n}. That is, it can be considered that one element in one slot timing set corresponds to the first slot set of {n-K1-offset1, n-K1-offset2...n-K1-offsetn}.

Optionally, the number M of the at least two consecutive slot units may be preconfigured, or predefined by a protocol, or a fixed value.

Optionally, the slot timing offset may be from the slot timing offset set {offset1, offset2...offset n}. This set may be configured by a higher layer or predefined by a protocol.

Optionally, in a case that the number of the at least two consecutive slot units is preconfigured or predefined by a protocol, the number of the at least two consecutive slot units is associated with a first SCS and the first SCS is an SCS of a BWP in which the actual HARQ ACK feedback unit is.

Optionally, the number M of the at least two consecutive slot units may be fixed, configured by a higher layer, or predefined.

Optionally, in a case that the number M of the at least two consecutive slot units is configured by a higher layer or predefined, M may be associated with an SCS of a downlink BWP/uplink BWP in which the actual HARQ ACK feedback unit (slot/subslot n) is.

Optionally, a network-side device such as a base station may determine whether M=1 or >1 based on whether the UE has reported the capability to schedule multiple consecutive PDSCHs across multiple slots by one DCI.

Optionally, the number M of the at least two consecutive slot units can be inferred from the TDRA. For example, the number of spanned UL slots or subslots can be determined based on the SLIV set in each row of the TDRA, and M is the maximum number of spanned UL slots or subslots in all rows of the table.

Optionally, the HARQ ACK feedback codebooks corresponding to multiple PDSCHs scheduled by one DCI are fed back on same or different PUCCHs or PUSCHs.

Optionally, the HARQ ACK feedback codebooks corresponding to multiple PDSCHs scheduled by one DCI may be fed back on one PUCCH or PUSCH.

Optionally, the HARQ ACK feedback codebooks corresponding to multiple PDSCHs scheduled by one DCI may be fed back on multiple PUCCHs or PUSCHs.

Optionally, in a case that HARQ ACK feedback codebooks corresponding to multi-slot PDSCHs scheduled by one DCI are fed back on same or different PUCCHs or PUSCHs, the method further includes:

grouping the multi-slot PDSCHs scheduled by one DCI to obtain at least one PDSCH group; where feedbacks for different PDSCH groups are carried on different PUCCHs or PUSCHs, and the number of the at least one PDSCH group is preconfigured, or predefined by a protocol, or a fixed value.

Optionally, in a case that feedbacks for multi-slot PDSCHs scheduled by one DCI are grouped to be carried on different PUCCH/PUSCHs and are grouped into N groups by means of fixed setting, higher-layer configuration, or predefining, the number of groups N may be associated with an SCS. For the number M of the at least two consecutive slot units, M=[M/N].

For example, RRC-configured TDRA contains two rows, which are (0-13) and (2-7)+(8-13)+(0-10), the set K1 configured by RRC is {5, 6}, and no CBG transmission is configured and a single codeword is used, or two codewords+spatial multiplexing is used. According to the maximum number of slots contained in the two SLIV rows, M is 2, and a current slot n is used for HARQ ACK feedback. In this case, K1 corresponds to first slot sets {n-5, n-6} and {n-6, n-7}, and the second slot set is {n-5, n-6, n-7} after obtaining a union. The SLIV sets formed by all rows are {(2-7), (8-13), (0-10), (0-13)}, and after grouping by using the overlapped grouping method, the SLIV subsets may be {(2-7), (0-10), (0-13)}, and {(8-13)}.

Optionally, in the second slot set, TDD is configured to be DDU (all symbols in slots n-7 and n-6 are for downlink, and all symbols in slot n-5 are for uplink). In this case, a total of 2*2=4 (2 subsets*2 downlink slots) candidate PDSCH reception occasion sets are available. One PDSCH bit is fed back for each candidate PDSCH reception occasion. In a case that SLIVs of PDSCHs actually scheduled for slot n-7 are (2-7) and (8-13), corresponding HARQ ACK bits are fed back, for example, ACK ACK. In a case that an SLIV of PDSCHs actually scheduled for slot n-6 is (0-10), a corresponding HARQ bit is provided, for example, ACK. In addition, a NACK is fed back for the PDSCH candidate occasions of the second subset {(8-13)}. Then, the HARQ ACK feedback corresponding to the PDSCH candidate occasion set is ACK ACK ACK NACK.

Optionally, in a case that one ACK/NACK value is fed back for each candidate PDSCH reception occasion according to RRC configuration, the first codebook is ACK NACK. The second codebook is ACK NACK. The first codebook and the second codebook may be carried on different PUCCH resources.

For example, RRC-configured TDRA contains three rows, which are (0-8) and (2-7)+(8-13)+(0-10), and (11-13), the set K1 configured by RRC is {5, 6}, and no CBG transmission is configured and a single codeword is used, or two codewords+spatial multiplexing is used. According to the maximum number of slots contained in the three SLIV rows, M may be 2, and a current slot n is used for HARQ ACK feedback. In this case, K1 corresponds to first slot sets {n-5, n-6} and {n-6, n-7}, and the second slot set is {n-5, n-6, n-7} after obtaining a union. The SLIV set formed by the last SLIV of each row may be {(0-10), (0-8), (11-13)}.

In the second slot set, TDD is configured to be DDU (all symbols in slots n-7 and n-6 are for downlink, and all symbols in slot n-5 are for uplink). Therefore, the first slot set is {n-5, n-6}. After grouping by using the overlapped grouping method, SLIV subsets are {(0-8)} and {(11-13)}, with a total of two candidate PDSCH reception occasions are available. Each subset corresponds to one bit, with a total of two bits of HARQ ACK. For reception occasions in the first set {n-7, n-6}, after grouping by using the overlapped grouping method, SLIV subsets are {(0-10), (0-8)} and {(11-13)}, with a total of two candidate PDSCH reception occasions, a total of three bits of HARQ ACK, a total of four candidate PDSCH reception occasion sets, and five bits (assuming that one bit of feedback is provided for each PDSCH). In this embodiment of this application, the maximum number of SLIVs contained in a row among all rows in each subset is used as the number of PDSCH feedbacks.

In a case that SLIVs of PDSCHs actually scheduled for slot n-7 are (2-7) and (8-13) and that an SLIV of PDSCHs actually scheduled for slot n-6 are (0-10), in the first slot set {n-7, n-6}, a NACK is fed back for the first subset, and a NACK is fed back for the second subset. In reception occasions in the first set {n-6, n-5}, corresponding HARQ bits are fed back for the first subset, for example, NACK ACK. In addition, a NACK is fed back for the PDSCH candidate occasions of the second subset {(11-13)}. Then, the HARQ ACK feedback corresponding to the PDSCH candidate occasion set is NACK NACK [NACK ACK] NACK ([ ] indicates that the feedbacks are for a same candidate PDSCH reception occasion.)

In a case that one ACK/NACK value is provided for every two candidate PDSCH reception occasions according to RRC configuration, the first codebook is NACK NACK. The second codebook is NACK NACK [ACK ACK] NACK. The first codebook and the second codebook may be carried on different PUCCH resources.

In this embodiment of this application, the candidate physical downlink shared channel PDSCH reception occasion set is determined based on the at least two consecutive slot units corresponding to each element in the slot timing set. That is, one slot timing set can correspond to as many feedback slot units as possible to carry feedbacks on one PUCCH, ensuring that feedbacks are provided for all scheduled PDSCHs and HARQ-ACKs for the scheduled PDSCHs are fed back on as few PUCCHs as possible. This reduces the number of semi-static codebook feedback bits, reduces overheads, and avoids that a feedback cannot be provided for a PDSCH in a case that one DCI schedules multiple PDSCHs at a time, thereby improving flexibility of base station scheduling.

It should be noted that the HARQ ACK feedback method in this embodiment of this application is performed by a HARQ ACK feedback apparatus or a control module for performing the HARQ ACK feedback method in the HARQ ACK feedback apparatus. In the embodiments of this application, the HARQ ACK feedback apparatus provided in the embodiments of this application is described by using an example in which the HARQ ACK feedback method is performed by a HARQ ACK feedback apparatus.

FIG. 9 is a schematic diagram of a structure of a HARQ ACK feedback apparatus according to this application. As shown in FIG. 9, the apparatus includes a first determining module 910 and a second determining module 920.

The first determining module 910 is configured to determine a candidate physical downlink shared channel PDSCH reception occasion set based on a slot timing set corresponding to an actual HARQ ACK feedback unit, where in the slot timing set, each element corresponds to one first slot set and each element corresponds to a different first slot set, where the first slot set includes at least two consecutive slot units.

The second determining module 920 is configured to determine a HARQ ACK feedback codebook based on the candidate PDSCH reception occasion set.

In the HARQ ACK feedback apparatus, the first determining module 910 is used to determine the candidate physical downlink shared channel PDSCH reception occasion set based on the slot timing set corresponding to the actual HARQ ACK feedback unit, where in the slot timing set, each element corresponds to one first slot set and each element corresponds to a different first slot set, where the first slot set includes at least two consecutive slot units; and then the second determining module 920 is used to determine the HARQ ACK feedback codebook based on the candidate PDSCH reception occasion set.

In this embodiment of this application, the candidate physical downlink shared channel PDSCH reception occasion set is determined based on the at least two consecutive slot units corresponding to each element in the slot timing set. That is, one slot timing set can correspond to as many feedback slot units as possible to carry feedbacks on one PUCCH, ensuring that feedbacks are provided for all scheduled PDSCHs and HARQ-ACKs for the scheduled PDSCHs are fed back on as few PUCCHs as possible. This reduces the number of semi-static codebook feedback bits, reduces overheads, and avoids that a feedback cannot be provided for a PDSCH in a case that one DCI schedules multiple PDSCHs at a time, thereby improving flexibility of base station scheduling.

Optionally, the first determining module is further configured to:

determine a second slot set corresponding to the candidate PDSCH reception occasion set based on the first slot set corresponding to each element in the slot timing set; where
the second slot set includes all slot units in all first slot sets, and all the slot units are non-repetitive.

Optionally, the first determining module is configured to:
perform grouping on a target SLIV set in a time domain resource allocation TDRA table to obtain at least one first target group.

The second determining module is configured to:

determine the HARQ ACK feedback codebook based on the at least one first target group; where each candidate PDSCH reception occasion corresponds to one first target group.

Optionally, the target SLIV set includes a set formed by all SLIVs in the TDRA table.

Optionally, each of the slot units in the second slot set corresponds to at least one candidate PDSCH reception occasion.

Optionally, the second determining module is further configured to:

for each first target group, feed back an ACK or NACK for only at most one SLIV in the first target group.

Optionally, the apparatus further includes:

a first removing module configured to remove, from the second slot set, an SLIV configured for uplink in a TDD frame structure before grouping is performed on the target SLIV set in the TDRA table.

Optionally, the target SLIV set includes an SLIV set formed by SLIVs in predetermined positions in all rows of the TDRA table.

Optionally, each first slot set corresponds to at least one candidate PDSCH reception occasion.

Optionally, the second determining module is further configured to:

for each first target group, feed back an ACK or NACK for only at most one SLIV-containing row in the first target group.

The number of ACKs or NACKs for the at most one SLIV-containing row is determined based on the number of SLIVs in a row containing the maximum number of SLIVs among all SLIV-containing rows or determined based on the number of SLIVs in a row containing the maximum number of SLIVs in the TDRA table.

Optionally, a second removing module is configured to remove, from the first slot set, all SLIVs in a row containing an SLIV configured for uplink in a TDD frame structure before grouping is performed on the target SLIV set in the TDRA table.

Optionally, the second determining module is further configured to:

> group candidate PDSCH reception occasions to obtain at least one second target group; and
> determine the HARQ ACK feedback codebook based on the at least one second target group.

Optionally, the second determining module is further configured to:

> group slot units in the second slot set to obtain at least one second target group; and
> determine the HARQ ACK feedback codebook based on the candidate PDSCH reception occasion sets of slot units in each second target group.

Optionally, the HARQ ACK feedback codebook includes a first codebook, where

each second target group corresponds to one bit in the first codebook.

Optionally, in a case that bits in the first codebook contain a NACK, the HARQ ACK feedback codebook includes a second codebook, where

bits in the second codebook contain an ACK or NACK of each candidate PDSCH reception occasion in the second target group corresponding to the NACK in the first codebook.

Optionally, the first codebook and the second codebook are carried on different PUCCH resources.

Optionally, the slot timing set includes at least one slot timing value K1, and positions of the at least two consecutive slot units are determined based on the at least one slot timing value K1 and the number of the at least two consecutive slot units; or

the slot timing set includes at least one slot timing value K1 and at least one slot timing offset, and positions of the at least two consecutive slot units are determined based on the at least one slot timing value K1 and the at least one slot timing offset; where the number of the at least two consecutive slot units is preconfigured, or predefined by a protocol, or a fixed value.

Optionally, in a case that the number of the at least two consecutive slot units is preconfigured or predefined by a protocol, the number of the at least two consecutive slot units is associated with a first SCS and the first SCS is an SCS of a BWP in which the actual HARQ ACK feedback unit is.

Optionally, HARQ ACK feedback codebooks corresponding to multiple PDSCHs scheduled by one DCI are fed back on same or different PUCCHs or PUSCHs.

Optionally, the apparatus further includes:

> a first grouping module configured to: in a case that HARQ ACK feedback codebooks corresponding to multi-slot PDSCHs scheduled by one DCI are fed back on same or different PUCCHs or PUSCHs, group the multi-slot PDSCHs scheduled by one DCI to obtain at least one PDSCH group; where feedbacks for different PDSCH groups are carried on different PUCCHs or PUSCHs, and the number of the at least one PDSCH group is preconfigured, or predefined by a protocol, or a fixed value.

In this embodiment of this application, the candidate physical downlink shared channel PDSCH reception occasion set is determined based on the at least two consecutive slot units corresponding to each element in the slot timing set. That is, one slot timing set can correspond to as many feedback slot units as possible to carry feedbacks on one PUCCH, ensuring that feedbacks are provided for all scheduled PDSCHs and HARQ-ACKs for the scheduled PDSCHs are fed back on as few PUCCHs as possible. This reduces the number of semi-static codebook feedback bits, reduces overheads, and avoids that a feedback cannot be provided for a PDSCH in a case that one DCI schedules multiple PDSCHs at a time, thereby improving flexibility of base station scheduling.

The HARQ ACK feedback apparatus in this embodiment of this application may be an apparatus or an apparatus or electronic device with an operating system, or may be a component, an integrated circuit, or a chip of a terminal. The apparatus or electronic device may be a mobile terminal or a non-mobile terminal. For example, the mobile terminal may include but is not limited to a type of the foregoing terminal 11, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The HARQ ACK feedback apparatus in this embodiment of this application may be an apparatus with an operating system. The operating system may be an Android (Android) operating system, an iOS operating system, or another possible operating system. This is not specifically limited in the embodiments of this application.

The HARQ ACK feedback apparatus provided in this embodiment of this application can implement the processes implemented by the method embodiment illustrated in FIG. 1 to FIG. 7, with the same technical effects achieved. To avoid repetition, details are not described herein again.

Optionally, FIG. 10 is a schematic diagram of a structure of a communications device according to an embodiment of this application. As shown in FIG. 10, an embodiment of this application further provides a communications device 1000 including a processor 1001, a memory 1002, and a program or instructions stored in the memory 1002 and capable of running on the processor 1001. For example, in a case that the communications device 1000 is a terminal, when the program or instructions are executed by the processor 1001, all processes in the foregoing embodiments of the HARQ ACK feedback method are implemented, with the same technical effects achieved. In a case that the communications device 1000 is a network-side device, when the program or instructions are executed by the processor 1001, all processes in the foregoing embodiments of the HARQ ACK feedback method are implemented, with the same technical effects achieved. To avoid repetition, details are not described herein again.

An embodiment of this application further provides a terminal including a processor and a communication interface. The processor is configured to:

determine a candidate physical downlink shared channel PDSCH reception occasion set based on a slot timing set corresponding to an actual HARQ ACK feedback unit, where in the slot timing set, each element corresponds to one first slot set and each element corresponds to a different first slot set, where the first slot set includes at least two consecutive slot units; and
determine a HARQ ACK feedback codebook based on the candidate PDSCH reception occasion set.

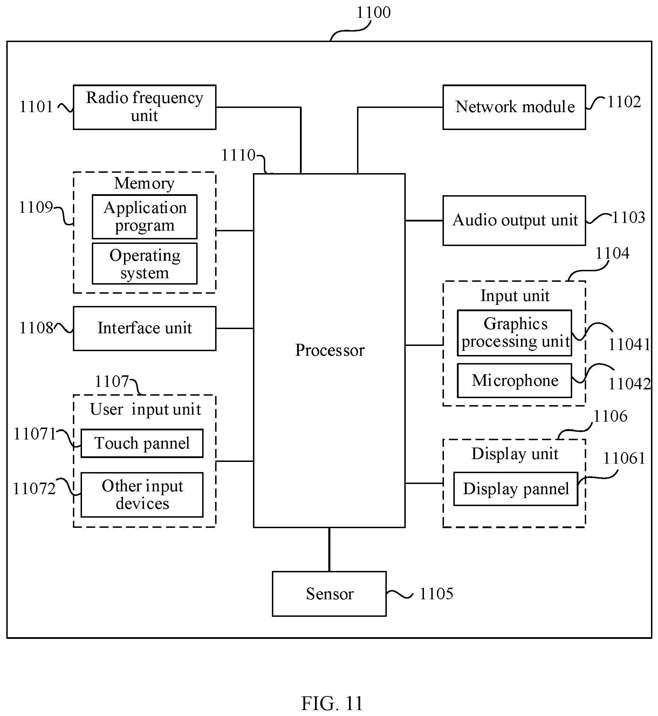

The terminal embodiment is corresponding to the foregoing method embodiments used on the terminal side. All the implementation processes and implementation methods of the foregoing method embodiments can be applied to the terminal embodiment, with the same technical effects achieved. Specifically, FIG. 11 is a schematic diagram of a hardware structure of a terminal implementing the embodiments of this application.

A terminal 1100 includes but is not limited to at least some components of a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power source (for example, a battery) for supplying power to the components. The power source may be logically connected to the processor 1110 through a power management system. In this way, functions such as charge management, discharge management, and power consumption management are implemented by using the power management system. The structure of the terminal shown in FIG. 11 does not constitute a limitation on the terminal. The terminal may include more or fewer components than illustrated in the figure, or combine some components, or have a different component arrangement. Details are not described herein.

It should be understood that in the embodiments of this application, the input unit 1104 may include a graphics processing unit (Graphics Processing Unit, GPU) 11041 and a microphone 11042. The graphics processing unit 11041 processes image data of a static picture or a video that is obtained by an image capture apparatus (for example, a camera) in a video capture mode or an image capture mode. The display unit 1106 may include a display panel 11061. The display panel 11061 may be configured in a form of a liquid crystal display, an organic light-emitting diode, or the like. The user input unit 1107 includes a touch panel 11071 and other input devices 11072. The touch panel 11071 is also referred to as a touch screen. The touch panel 11071 may include two parts: a touch detection apparatus and a touch controller. The other input devices 11072 may include but are not limited to a physical keyboard, a functional button (such as a volume control button or a power on/off button), a trackball, a mouse, and a joystick. Details are not described herein.

In the embodiments of this application, the radio frequency circuit 1101 receives downlink data from the network-side device for processing by the processor 1110, and sends uplink data to the network-side device. Generally, the radio frequency unit 1101 includes but is not limited to an antenna, at least one amplifier, a transceiver, a coupler, a low noise amplifier, a duplexer, and the like.

The memory 1109 may be configured to store software programs or instructions, and various data. The memory 1109 may mainly include a program or instruction storage area and a data storage area. The program or instruction storage area may store an operating system, an application program or instructions required by at least one function (for example, an audio playing function and an image playing function), and the like. In addition, the memory 1109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash storage device, or another volatile solid-state storage device.

The processor 1110 may include one or more processing units. Optionally, the processor 1110 may integrate an application processor and a modem processor. The application processor mainly processes an operating system, a user interface, an application program or instructions, and the like. The modem processor mainly processes wireless communication, for example, a baseband processor. It should be understood that alternatively, the modem processor may not be integrated into the processor 1110.

The processor 1110 is configured to:

determine a candidate physical downlink shared channel PDSCH reception occasion set based on a slot timing set corresponding to an actual HARQ ACK feedback unit, where in the slot timing set, each element corresponds to one first slot set and each element corresponds to a different first slot set, where the first slot set includes at least two consecutive slot units; and
determine a HARQ ACK feedback codebook based on the candidate PDSCH reception occasion set.

In this embodiment of this application, the candidate physical downlink shared channel PDSCH reception occasion set is determined based on the at least two consecutive slot units corresponding to each element in the slot timing set. That is, one slot timing set can correspond to as many feedback slot units as possible to carry feedbacks on one PUCCH, ensuring that feedbacks are provided for all scheduled PDSCHs and HARQ-ACKs for the scheduled PDSCHs are fed back on as few PUCCHs as possible. This reduces the number of semi-static codebook feedback bits, reduces overheads, and avoids that a feedback cannot be provided for a PDSCH in a case that one DCI schedules multiple PDSCHs at a time, thereby improving flexibility of base station scheduling.

Optionally, the processor 1110 is configured to:

determine a second slot set corresponding to the candidate PDSCH reception occasion set based on the first slot set corresponding to each element in the slot timing set; where
the second slot set includes all slot units in all first slot sets, and all the slot units are non-repetitive.

Optionally, the processor 1110 is configured to:

perform grouping on a target SLIV set in a time domain resource allocation TDRA table to obtain at least one first target group.
determine the HARQ ACK feedback codebook based on the at least one first target group; where each candidate PDSCH reception occasion corresponds to one first target group.

Optionally, the target SLIV set includes a set formed by all SLIVs in the TDRA table.

Optionally, each of the slot units in the second slot set corresponds to at least one candidate PDSCH reception occasion.

Optionally, the processor 1110 is configured to: for each first target group, feed back an ACK or NACK for only at most one SLIV in the first target group.

Optionally, the processor 1110 is configured to: remove, from the second slot set, an SLIV configured for uplink in a TDD frame structure before grouping is performed on the target SLIV set in the TDRA table.

Optionally, the target SLIV set includes an SLIV set formed by SLIVs in predetermined positions in all rows of the TDRA table.

Optionally, each first slot set corresponds to at least one candidate PDSCH reception occasion.

Optionally, the processor 1110 is configured to: for each first target group, feed back an ACK or NACK for only at most one SLIV-containing row in the first target group.

The number of ACKs or NACKs for the at most one SLIV-containing row is determined based on the number of SLIVs in a row containing the maximum number of SLIVs among all SLIV-containing rows or determined based on the number of SLIVs in a row containing the maximum number of SLIVs in the TDRA table.

Optionally, the processor 1110 is configured to: remove, from the first slot set, all SLIVs in a row containing an SLIV configured for uplink in a TDD frame structure before grouping is performed on the target SLIV set in the TDRA table.

Optionally, the processor 1110 is configured to:

group candidate PDSCH reception occasions to obtain at least one second target group; and
determine the HARQ ACK feedback codebook based on the at least one second target group.

Optionally, the processor 1110 is configured to:

group slot units in the second slot set to obtain at least one second target group; and

determine the HARQ ACK feedback codebook based on the candidate PDSCH reception occasion sets of slot units in each second target group.

Optionally, the HARQ ACK feedback codebook includes a first codebook, where
each second target group corresponds to one bit in the first codebook.

Optionally, in a case that bits in the first codebook contain a NACK, the HARQ ACK feedback codebook includes a second codebook, where
bits in the second codebook contain an ACK or NACK of each candidate PDSCH reception occasion in the second target group corresponding to the NACK in the first codebook.

Optionally, the first codebook and the second codebook are carried on different PUCCH resources.

Optionally, the slot timing set includes at least one slot timing value K1, and positions of the at least two consecutive slot units are determined based on the at least one slot timing value K1 and the number of the at least two consecutive slot units; or
the slot timing set includes at least one slot timing value K1 and at least one slot timing offset, and positions of the at least two consecutive slot units are determined based on the at least one slot timing value K1 and the at least one slot timing offset; where the number of the at least two consecutive slot units is preconfigured, or predefined by a protocol, or a fixed value.

Optionally, in a case that the number of the at least two consecutive slot units is preconfigured or predefined by a protocol, the number of the at least two consecutive slot units is associated with a first SCS and the first SCS is an SCS of a BWP in which the actual HARQ ACK feedback unit is.

Optionally, HARQ ACK feedback codebooks corresponding to multiple PDSCHs scheduled by one DCI are fed back on same or different PUCCHs or PUSCHs.

Optionally, in a case that HARQ ACK feedback codebooks corresponding to multi-slot PDSCHs scheduled by one DCI are fed back on same or different PUCCHs or PUSCHs, the processor 1110 is further configured to:

> group the multi-slot PDSCHs scheduled by one DCI to obtain at least one PDSCH group; where feedbacks for different PDSCH groups are carried on different PUCCHs or PUSCHs, and the number of the at least one PDSCH group is preconfigured, or predefined by a protocol, or a fixed value.

In this embodiment of this application, the candidate physical downlink shared channel PDSCH reception occasion set is determined based on the at least two consecutive slot units corresponding to each element in the slot timing set. That is, one slot timing set can correspond to as many feedback slot units as possible to carry feedbacks on one PUCCH, ensuring that feedbacks are provided for all scheduled PDSCHs and HARQ-ACKs for the scheduled PDSCHs are fed back on as few PUCCHs as possible. This reduces the number of semi-static codebook feedback bits, reduces overheads, and avoids that a feedback cannot be provided for a PDSCH in a case that one DCI schedules multiple PDSCHs at a time, thereby improving flexibility of base station scheduling.

An embodiment of this application further provides a readable storage medium, where the readable storage medium stores a program or instructions, and when the program or instructions are executed by a processor, the processes of the foregoing embodiments of the HARQ ACK feedback method are implemented, with the same technical effects achieved. To avoid repetition, details are not described herein again.

The processor is the processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing embodiments of the HARQ ACK feedback method, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that, in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such a process, method, article, or apparatus. In the absence of more restrictions, an element defined by "including a ..." does not exclude another same element in a process, method, article, or apparatus that includes the element. In addition, it should be noted that the scopes of the method and apparatus in the implementations of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

## Claims

1. A hybrid automatic repeat request acknowledgment, HARQ ACK, feedback method comprising:

   determining (600), by a terminal, a candidate physical downlink shared channel, PDSCH, reception occasion set based on a slot timing set corresponding to an actual HARQ ACK feedback unit, wherein in the slot timing set, each element corresponds to one first slot set and each element corresponds to a different first slot set, wherein the first slot set comprises at least two consecutive slot units; and
   determining (610), by the terminal, a HARQ ACK feedback codebook based on the candidate PDSCH reception occasion set.

2. The HARQ ACK feedback method according to claim 1, wherein the determining (600) a candidate physical downlink shared channel, PDSCH, reception occasion set based on a slot timing set corresponding to an actual HARQ ACK feedback unit comprises:

   determining a second slot set corresponding to the candidate PDSCH reception occasion set based on the first slot set corresponding to each element in the slot timing set; wherein
   the second slot set comprises all slot units in all first slot sets, and all the slot units are non-repetitive.

3. The HARQ ACK feedback method according to claim 2, wherein the determining (600) a candidate physical downlink shared channel, PDSCH, reception occasion set based on a slot timing set corresponding to an actual HARQ ACK feedback unit comprises:

   performing grouping on a target start symbol and length of consecutive symbols, SLIV, set in a time domain resource allocation, TDRA, table to obtain at least one first target group; and the determining a HARQ ACK feedback codebook based on the candidate PDSCH reception occasion set comprises:

   determining the HARQ ACK feedback codebook based on the at least one first target group; wherein
   each candidate PDSCH reception occasion corresponds to one first target group.

4. The HARQ ACK feedback method according to claim 3, wherein the target SLIV set comprises a set formed by all SLIVs in the TDRA table.

5. The HARQ ACK feedback method according to claim 4, wherein each of the slot units in the second slot set corresponds to at least one candidate PDSCH reception occasion.

6. The HARQ ACK feedback method according to claim 4, before the performing grouping on a target SLIV set in a TDRA table, further comprising:
   removing, from the second slot set, an SLIV configured for uplink in a time division duplexing, TDD, frame structure.

7. The HARQ ACK feedback method according to claim 3, wherein the target SLIV set comprises an SLIV set formed by SLIVs in predetermined positions in all rows of the TDRA table.

8. The HARQ ACK feedback method according to claim 7, wherein each first slot set corresponds to at least one candidate PDSCH reception occasion.

9. The HARQ ACK feedback method according to claim 7, before the performing grouping on a target SLIV set in a TDRA table, further comprising:
   removing, from the first slot set, all SLIVs in a row containing an SLIV configured for uplink in a TDD frame structure.

10. A HARQ ACK feedback apparatus comprising:

    a first determining module (910) configured to determine a candidate physical downlink shared channel, PDSCH, reception occasion set based on a slot timing set corresponding to an actual HARQ ACK feedback unit, wherein in the slot timing set, each element corresponds to one first slot set and each element corresponds to a different first slot set, wherein the first slot set comprises at least two consecutive slot units; and

a second determining module (920) configured to determine a HARQ ACK feedback codebook based on the candidate PDSCH reception occasion set.

11. The HARQ ACK feedback apparatus according to claim 10, wherein the first determining module (910) is further configured to:

determine a second slot set corresponding to the candidate PDSCH reception occasion set based on the first slot set corresponding to each element in the slot timing set; wherein the second slot set comprises all slot units in all first slot sets, and all the slot units are non-repetitive.

12. The HARQ ACK feedback apparatus according to claim 11, wherein the first determining module (910) is configured to:

perform grouping on a target start symbol and length of consecutive symbols, SLIV, set in a time domain resource allocation, TDRA, table to obtain at least one first target group; and the second determining module is configured to:

determine the HARQ ACK feedback codebook based on the at least one first target group; wherein each candidate PDSCH reception occasion corresponds to one first target group.

13. The HARQ ACK feedback apparatus according to claim 12, wherein the target SLIV set comprises a set formed by all SLIVs in the TDRA table.

14. The HARQ ACK feedback apparatus according to claim 13, wherein each of the slot units in the second slot set corresponds to at least one candidate PDSCH reception occasion.

15. A readable storage medium, wherein the readable storage medium stores a program or instructions, and when the program or instructions are executed by a processor, the program or instructions cause the processor to implement the steps of the HARQ ACK feedback method according to any one of claims 1 to 9.

**Patentansprüche**

1. Verfahren für hybrides automatisches Wiederholungsanforderungsbestätigungs-, HARQ-ACK-, Feedback, umfassend:

Bestimmen (600), durch ein Endgerät, eines physikalischen gemeinsam genutzten Kandidaten-Downlink-Kanal-, PDSCH, Empfangsereignis-Satzes auf Grundlage eines Slot-Timing-Satzes, der einer tatsächlichen HARQ-ACK-Feedback-Einheit entspricht, wobei in dem Slot-Timing-Satz ein jedes Element einem ersten Slot-Satz entspricht und ein jedes Element einem anderen ersten Slot-Satz entspricht, wobei der erste Slot-Satz mindestens zwei aufeinanderfolgende Slot-Einheiten umfasst; und Bestimmen (610), durch das Endgerät, eines HARQ-ACK-Feedback-Codebuchs auf Grundlage des Kandidaten-PDSCH-Empfangsereignis-Satzes.

2. Verfahren für HARQ-ACK-Feedback nach Anspruch 1, wobei das Bestimmen (600) eines physikalischen gemeinsam genutzten Kandidaten-Downlink-Kanal-, PDSCH, Empfangsereignis-Satzes auf Grundlage eines Slot-Timing-Satzes, der einer tatsächlichen HARQ-ACK-Feedback-Einheit entspricht, Folgendes umfasst:

Bestimmen eines zweiten Slot-Satzes, der dem Kandidaten-PDSCH-Empfangsereignis-Satz entspricht, auf Grundlage des ersten Slot-Satzes, der einem jeden Element in dem Slot-Timing-Satz entspricht; wobei der zweite Slot-Satz alle Slot-Einheiten in allen ersten Slot-Sätzen umfasst, und alle Slot-Einheiten sind nicht wiederholend.

3. Verfahren für HARQ-ACK-Feedback nach Anspruch 2, wobei das Bestimmen (600) eines physikalischen gemeinsam genutzten Kandidaten-Downlink-Kanal-, PDSCH, Empfangsereignis-Satzes auf Grundlage eines Slot-Timing-Satzes, der einer tatsächlichen HARQ-ACK-Feedback-Einheit entspricht, Folgendes umfasst:

Durchführen einer Gruppierung an einem Zielstartsymbol und einer Länge aufeinanderfolgender Symbole, SLIV, die in einer Zeitbereichsressourcenallokations-, TDRA, Tabelle festgelegt sind, um mindestens eine erste Zielgruppe zu erhalten; und das Bestimmen eines HARQ-ACK-Feedback-Codebuchs auf Grundlage des Kandidaten-PDSCH-Empfangsereignis-Satzes Folgendes umfasst:

Bestimmen des HARQ-ACK-Feedback-Codebuchs auf Grundlage der mindestens einen ersten Zielgruppe; wobei ein jedes Kandidaten-PDSCH-Empfangsereignis einer ersten Zielgruppe entspricht.

4. Verfahren für HARQ-ACK-Feedback nach Anspruch 3, wobei der Ziel-SLIV-Satz einen Satz umfasst, der durch alle SLIVs in der TDRA-Tabelle gebildet wird.

5. Verfahren für HARQ-ACK-Feedback nach Anspruch 4, wobei eine jede der Slot-Einheiten in dem zweiten Slot-Satz mindestens einem Kandidaten-PDSCH-Empfangsereignis entspricht.

6. Verfahren für HARQ-ACK-Feedback nach Anspruch 4, vor dem Durchführen der Gruppierung an einer Ziel-SLIV, die in einer TDRA-Tabelle festgelegt ist, ferner umfassend: Entfernen einer SLIV, die für Uplink in einer Zeiteinteilungsduplex-, TDD, Rahmenstruktur konfiguriert ist, aus dem zweiten Slot-Satz.

7. Verfahren für HARQ-ACK-Feedback nach Anspruch 3, wobei der Ziel-SLIV-Satz einen SLIV-Satz umfasst, der durch SLIVs in vorbestimmten Positionen in allen Reihen der TDRA-Tabelle gebildet wird.

8. Verfahren für HARQ-ACK-Feedback nach Anspruch 7, wobei ein jeder erste Slot-Satz mindestens einem Kandidaten-PDSCH-Empfangsereignis entspricht.

9. Verfahren für HARQ-ACK-Feedback nach Anspruch 7, vor dem Durchführen der Gruppierung an einer Ziel-SLIV, die in einer TDRA-Tabelle festgelegt ist, ferner umfassend: Entfernen aller SLIVs in einer Reihe, die eine SLIV enthalten, die für Uplink in einer TDD-Rahmenstruktur konfiguriert ist, aus dem ersten Slot-Satz.

10. Vorrichtung für HARQ-ACK-Feedback, umfassend:

ein erstes Bestimmungsmodul (910), das dazu konfiguriert ist, einen physikalischen gemeinsam genutzten Kandidaten-Downlink-Kanal-, PDSCH, Empfangsereignis-Satz auf Grundlage eines Slot-Timing-Satzes, der einer tatsächlichen HARQ-ACK-Feedback-Einheit entspricht, zu bestimmen, wobei in dem Slot-Timing-Satz ein jedes Element einem ersten Slot-Satz entspricht und ein jedes Element einem anderen ersten Slot-Satz entspricht, wobei der erste Slot-Satz mindestens zwei aufeinanderfolgende Slot-Einheiten umfasst; und
ein zweites Bestimmungsmodul (920), das dazu konfiguriert ist, ein HARQ-ACK-Feedback-Codebuch auf Grundlage des Kandidaten-PDSCH-Empfangsereignis-Satzes zu bestimmen.

11. Vorrichtung für HARQ-ACK-Feedback nach Anspruch 10, wobei das erste Bestimmungsmodul (910) ferner zu Folgendem konfiguriert ist:

Bestimmen eines zweiten Slot-Satzes, der dem Kandidaten-PDSCH-Empfangsereignis-Satz entspricht, auf Grundlage des ersten Slot-Satzes, der einem jeden Element in dem Slot-Timing-Satz entspricht; wobei
der zweite Slot-Satz alle Slot-Einheiten in allen ersten Slot-Sätzen umfasst, und alle Slot-Einheiten sind nicht wiederholend.

12. Vorrichtung für HARQ-ACK-Feedback nach Anspruch 11, wobei das erste Bestimmungsmodul (910) zu Folgendem konfiguriert ist:

Durchführen einer Gruppierung an einem Zielstartsymbol und einer Länge aufeinanderfolgender Symbole, SLIV, die in einer Zeitbereichsressourcenallokations-, TDRA, Tabelle festgelegt sind, um mindestens eine erste Zielgruppe zu erhalten; und
das zweite Bestimmungsmodul zu Folgendem konfiguriert ist:

Bestimmen des HARQ-ACK-Feedback-Codebuchs auf Grundlage der mindestens einen ersten Zielgruppe; wobei
ein jedes Kandidaten-PDSCH-Empfangsereignis einer ersten Zielgruppe entspricht.

13. Vorrichtung für HARQ-ACK-Feedback nach Anspruch 12, wobei der Ziel-SLIV-Satz einen Satz umfasst, der durch alle SLIVs in der TDRA-Tabelle gebildet wird.

14. Vorrichtung für HARQ-ACK-Feedback nach Anspruch 13, wobei eine jede der Slot-Einheiten in dem zweiten Slot-Satz mindestens einem Kandidaten-PDSCH-Empfangsereignis entspricht.

15. Lesbares Speichermedium, wobei das lesbare Speichermedium ein Programm oder Anweisungen speichert und, wenn das Programm oder die Anweisungen von einem Prozessor ausgeführt werden, das Programm oder die Anweisungen den Prozessor veranlassen, die Schritte des Verfahrens für HARQ-ACK-Feedback nach einem der Ansprüche 1 bis 9 umzusetzen.

**Revendications**

1. Procédé de rétroaction d'accusé de réception de demande de répétition automatique hybride, ACK HARQ, comprenant :

déterminer (600), par un terminal, un ensemble d'occasions de réception de canal physique partagé en liaison descendante, PDSCH, candidat sur la base d'un ensemble de synchronisation de créneau correspondant à une unité de rétroaction d'ACK HARQ réelle, dans lequel, dans l'ensemble de synchronisation de créneau, chaque élément correspond à un premier ensemble de créneaux et chaque élément correspond à un premier ensemble de créneaux différent, dans lequel le premier ensemble de créneaux comprend au moins deux unités de créneau consécutives ; et

déterminer (610), par le terminal, un livre de codes de rétroaction d'ACK HARQ sur la base de l'ensemble d'occasions de réception PDSCH candidat.

2. Procédé de rétroaction d'ACK HARQ selon la revendication 1, dans lequel la détermination (600) d'un ensemble d'occasions de réception de canal physique partagé en liaison descendante, PDSCH, candidat sur la base d'un ensemble de synchronisation de créneau correspondant à une unité de rétroaction d'ACK HARQ réelle comprend :

déterminer un second ensemble de créneaux correspondant à l'ensemble d'occasions de réception de PDSCH candidat sur la base du premier ensemble de créneaux correspondant à chaque élément dans l'ensemble de synchronisation de créneau ; dans lequel

le second ensemble de créneaux comprend toutes les unités de créneau dans tous les premiers ensembles de créneaux, et toutes les unités de créneau ne sont pas répétitives.

3. Procédé de rétroaction d'ACK HARQ selon la revendication 2, dans lequel la détermination (600) d'un ensemble d'occasions de réception de canal physique partagé en liaison descendante, PDSCH, candidat sur la base d'un ensemble de synchronisation de créneau correspondant à une unité de rétroaction d'ACK HARQ réelle comprend :

effectuer un regroupement sur un symbole de début cible et une longueur de symboles consécutifs, SLIV, définis dans une table d'attribution de ressources de domaine temporel, TDRA, afin d'obtenir au moins un premier groupe cible ; et la détermination d'un livre de codes de rétroaction d'ACK HARQ sur la base de l'ensemble d'occasions de réception de PDSCH candidat comprend :

déterminer le livre de codes de rétroaction d'ACK HARQ sur la base d'au moins un premier groupe cible ; dans lequel chaque occasion de réception de PDSCH candidate correspond à un premier groupe cible.

4. Procédé de rétroaction d'ACK HARQ selon la revendication 3, dans lequel l'ensemble de SLIV cible comprend un ensemble formé par tous les SLIV dans la table TDRA.

5. Procédé de rétroaction d'ACK HARQ selon la revendication 4, dans lequel chaque unité de créneau dans le second ensemble de créneaux correspond à au moins une occasion de réception de PDSCH candidate.

6. Procédé de rétroaction d'ACK HARQ selon la revendication 4, avant l'exécution du regroupement sur un ensemble de SLIV cible dans une table TDRA, comprenant en outre :
supprimer, du second ensemble de créneaux, une SLIV configurée pour la liaison montante dans une structure de trame de duplexage par répartition dans le temps, TDD.

7. Procédé de rétroaction d'ACK HARQ selon la revendication 3, dans lequel l'ensemble de SLIV cible comprend un ensemble de SLIV formé par des SLIV dans des positions prédéterminées dans toutes les lignes de la table TDRA.

8. Procédé de rétroaction d'ACK HARQ selon la revendication 7, dans lequel chaque premier ensemble de créneaux correspond à au moins une occasion de réception PDSCH candidate.

9. Procédé de rétroaction d'ACK HARQ selon la revendication 7, avant l'exécution du regroupement sur un ensemble de SLIV cible dans une table TDRA, comprenant en outre :
supprimer, du premier ensemble de créneaux, toutes les SLIV d'une ligne contenant une SLIV configurée pour la liaison montante dans une structure de trame TDD.

10. Appareil de rétroaction d'ACK HARQ, comprenant :

un premier module de détermination (910) configuré pour déterminer un ensemble d'occasions de réception de canal physique partagé en liaison descendante, PDSCH, candidat sur la base d'un ensemble de synchronisation de créneau correspondant à une unité de rétroaction d'ACK HARQ réelle, dans lequel, dans l'ensemble de synchronisation de créneau, chaque élément correspond à un premier ensemble de créneaux et chaque élément correspond à un premier ensemble de créneaux différent, dans lequel le premier ensemble de créneaux comprend au moins deux unités de créneau consécutives ; et

un second module de détermination (920) configuré pour déterminer un livre de codes de rétroaction d'ACK HARQ sur la base de l'ensemble d'occasions de réception PDSCH candidat.

11. Appareil de rétroaction d'ACK HARQ selon la revendication 10, dans lequel le premier module de détermination (910) est en outre configuré pour :

déterminer un second ensemble de créneaux correspondant à l'ensemble d'occasions de réception de PDSCH candidat sur la base du premier ensemble de créneaux correspondant à chaque élément dans ensemble de synchronisation de créneau ; dans lequel le second ensemble de créneaux comprend toutes les unités de créneau dans tous les premiers ensembles de créneaux, et toutes les unités de créneau ne sont pas répétitives.

12. Appareil de rétroaction d'ACK HARQ selon la revendication 11, dans lequel le premier module de détermination (910) est configuré pour :

effectuer un regroupement sur un symbole de début cible et une longueur de symboles consécutifs, SLIV, définis dans une table d'attribution de ressources de domaine temporel, TDRA, afin d'obtenir au moins un premier groupe cible ; et le second module de détermination est configuré pour :

déterminer le livre de codes de rétroaction d'ACK HARQ sur la base d'au moins un premier groupe cible ; dans lequel chaque occasion de réception de PDSCH candidate correspond à un premier groupe cible.

13. Appareil de rétroaction d'ACK HARQ selon la revendication 12, dans lequel l'ensemble de SLIV cible comprend un ensemble formé par toutes les SLIV dans la table TDRA.

14. Appareil de rétroaction d'ACK HARQ selon la revendication 13, dans lequel chaque unité de créneau dans le second ensemble de créneaux correspond à au moins une occasion de réception de PDSCH candidate.

15. Support de stockage lisible, dans lequel le support de stockage lisible stocke un programme ou des instructions, et lorsque le programme ou les instructions sont exécutés par un processeur, le programme ou les instructions amènent le processeur à mettre en œuvre les étapes du procédé de rétroaction d'ACK HARQ selon l'une quelconque des revendications 1 **à 9.**

FIG. 1

| Row index (R1) (row index) | K0 | Start | Length | Mapping Type |
|---|---|---|---|---|
| 0 | 0 | #2 | 4 | B |
| 1 | 0 | #6 | 4 | B |
| 2 | 0 | #10 | 4 | B |
| 3 | 0 | #0 | 13 | A |
| 4 | 0 | #4 | 2 | B |
| 5 | 0 | #6 | 2 | B |
| 6 | 0 | #8 | 2 | B |
| 7 | 0 | #10 | 2 | B |
| 8 | 0 | #12 | 2 | B |

| 1 | 2 | 3 | 4 | 5 | 6 | 7 | 8 | 9 | 10 | 11 | 12 | 13 |
|---|---|---|---|---|---|---|---|---|---|---|---|---|
| | RI 0 | RI 0 | RI 0 | RI 0 | RI 1 | RI 1 | RI 1 | RI 1 | RI 2 | RI 2 | RI 2 | RI 2 |
| RI 3 | RI 3 | RI 3 | RI 3 | RI 3 | RI 3 | RI 3 | RI 3 | RI 3 | RI 3 | RI 3 | RI 3 | RI 3 |
| | | | RI 4 | RI 4 | RI 5 | RI 5 | RI 6 | RI 6 | RI 7 | RI 7 | RI 8 | RI 8 |

**All possible PDSCH occasions based on the RRC-configured time domain RA table**

(All possible PDSCH Reception occasions based on the RRC-configured time domain RA table)

**PDSCH time domain RA table**

(PDSCH time domain RA table)

FIG. 2

FIG. 3

Candidate PDSCH reception occasions: $M_{A,c} = \{0,1,2,3,4\}$
(Candidate PDSCH reception occasions)

FIG. 4

Candidate PDSCH reception occasions: $M_{A,c} = \{0,1,2,3,4,5,6,7,8\}$
(Candidate PDSCH reception occasions)

FIG. 5

A terminal determines a candidate physical downlink shared channel PDSCH reception occasion set based on a slot timing set corresponding to an actual HARQ ACK feedback unit, where in the slot timing set, each element corresponds to one first slot set and each element corresponds to a different first slot set, where the first slot set includes at least two consecutive slot units — 600

The terminal determines a HARQ ACK feedback codebook based on the candidate PDSCH reception occasion set — 610

FIG. 6

| n | n+1 | n+2 | n+3 | n+4 | n+5 | n+6 | n+7 | n+8 | n+9 | n+10 | n+11 | n+12 |
|---|---|---|---|---|---|---|---|---|---|---|---|---|
|  | PDSCH | PDSCH | PDSCH | PDSCH |  |  |  |  |  |  | PUCCH |  |

FIG. 7

| n | n+1 | n+2 | n+3 | n+4 | n+5 | n+6 | n+7 | n+8 | n+9 | n+10 | n+11 | n+12 |
|---|---|---|---|---|---|---|---|---|---|---|---|---|
|  | PDSCH | PDSCH | PDSCH | PDSCH |  |  |  |  | PUCCH |  | PUCCH |  |

FIG. 8

910

920

First determining module

Second determining module

FIG. 9

1000

Communications device

1001

Processor

Memory

1002

FIG. 10

1100

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4068666 A1

**Non-patent literature cited in the description**

- PDSCH/PUSCH enhancements for NR from 52.6 GHz to 71 GHz. *3GPP DRAFT R1-2101198 of*, 19 January 2021